# EUROPÄISCHE PATENTANMELDUNG

(11) **EP 1 358 992 A1**
(43) Veröffentlichungstag der Anmeldung: **05.11.2003**
(21) Anmeldenummer: 03009602.8
(22) Anmeldetag: 29.04.2003
(51) Int. Cl.: B29C 45/37, B29C 45/14

(54) **Spritzgusswerkzeug zur Herstellung einer Chipkarte sowie ein Verfahren zur Herstellung einer Chipkarte**

(30) Priorität: 02.05.2002 DE 10219705
(71) Anmelder: Orga Kartensysteme GmbH, 33104 Paderborn (DE)
(72) Erfinder: Janczek, Thies, 24113 Molfsee (DE); Fischer, Dirk, Dr., 33106 Paderborn (DE)

(57) **Zusammenfassung**

Die Erfindung befasst sich mit einem Spritzgusswerkzeug (3) zur Herstellung einer Chipkarte. Dieses besteht aus zwei Werkzeughälften (1, 2), von denen eine als Spritzseite (1) mit wenigstens einer Einspritzdüse und die andere als Schließseite (2) ausgeführt ist. Eine innerhalb des geschlossenen Spritzgusswerkzeuges (3) gebildete Spritzgusswerkzeugkavität (4) weist die Form einer Chipkarte (5) auf. Mindestens eine der Werkzeughälften weist erfindungsgemäß einen Teilbereich auf, welcher mit einer Mikrolinsenstrukturoberfläche versehen ist.

Das vorgestellte Verfahren zur Herstellung einer Chipkarte mit dem oben beschriebenen Spritzgusswerkzeug ist durch folgende Verfahrensschritte gekennzeichnet:

Einlegen eines oder mehrerer Kunststofflabel in die Werkzeugform, Schließen des Spritzgusswerkzeuges und Zuführung eines verflüssigten Kunststoffes zur Bildung des Chipkartenkörpers. Die Kunststofflabel können hierbei zum einen aus einem transparenten Material bestehen, in welches sich beim Spritzgussvorgang die Mikrolinsenstrukturoberfläche einprägt oder die Kunststofflabel können Durchbrechungen (13,14) aufweisen. Werden durchbrochene Kunststofflabel verwendet, so wird die Chipkarte aus einem hochtransparenten Kunststoff geprägt, welcher auch die Durchbrechungen (13,14) der Kunststofflabel ausfüllt, so dass wiederum ein Mikrolinsenstrukturbereich entsteht.

## Beschreibung

Die vorliegende Erfindung betrifft ein Spritzgusswerkzeug zur Herstellung einer Chipkarte sowie ein Verfahren zur Herstellung einer Chipkarte mit einem derartigen Spritzgusswerkzeug.

Chipkarten oder auch SIM- bzw. Smart-Cards werden bereits im großen Umfang auf Grund ihrer vielfältigen Einsatzmöglichkeiten beispielsweise zur Abwicklung bargeldlosen Zahlungsverkehrs, als Zugangskennungskarten für sicherheitsrelevante Bereiche oder als Dienstausweise und Kundenkarten eingesetzt.

Die aus Kunststoff bestehenden ein- oder mehrschichtigen Chipkarten beinhalten üblicherweise Informationsdatenspeicher wie Mikrochips oder Magnetstreifen und können darüber hinaus mit ergänzenden Bauteilen wie Batterien, Tastaturen, Spulen usw. ausgestattet sein. Auf den Informationsdatenspeichern sind kartenrelevante Daten abgelegt und durch entsprechende Lesegeräte abrufbar.

Die Herstellung derartiger Chipkarten erfolgt gemäss einer bekannten Variante mit Hilfe des Spritzgussverfahrens, bei dem ein aus zwei Werkzeughälften bestehendes Spritzgusswerkzeug mit einer innenliegenden die Form der fertigen Chipkarten bildenden Kavität mit flüssigem Kunststoff gefüllt wird, welches nach dem Erkalten den fertigen Spritzgusskörper bildet. Ein derartiges Verfahren hat sich im Stand der Technik prinzipiell bewährt. Allerdings stößt das beschriebene Verfahren dort an seine technologischen Grenzen, wo zur sicherheitstechnischen Kennung von Chipkarten zusätzliche technische Merkmale in diese eingebracht werden, die die Fälschung derartiger Chipkarten erschweren. Als sicherheitstechnische Merkmale sind beispielsweise aus dem Patent EP 0698256 C1 allgemein als Sicherheitsvorrichtung bezeichnete Merkmale bekannt, bei denen eine an der Oberfläche der Chipkartenflachseite vorhandene Mikrolinsenstruktur mit unter der Linsenstruktur im Innern der Karte befindlichen Mikrobildern zusammenwirkt. Auf Grund der speziellen Linsenstruktur kann ein Betrachter der Chipkarte von außen die Mikrobilder erheblich vergrößert sehen, wobei diese Mikrobilder entsprechend einer besonderen Fokussierung des Laserstrahles gestaltet sein können. Das Einbringen der Merkmalskombination aus Mikrolinsenstruktur und darunter befindlichen Mikrobildern in Chipkarten erhöht in erheblichem Maße die Fälschungssicherheit derartiger Chipkarten, führt andererseits jedoch auf Grund des zusätzlichen Aufwandes für die Herstellung derartiger Sicherheitsmerkmale zu einer Verteuerung der Chipkarte, da eine mit diesen Sicherheitsmerkmalen versehene Karte nur im Laminationsverfahren und hier auch nur bei erhöhtem Herstellaufwand produziert werden kann.

Aufgabe der vorliegenden Erfindung ist es daher, ein Spritzgusswerkzeug zu offenbaren, mit Hilfe dessen eine Linsenstruktur der eingangs beschriebenen Art für die Bereitstellung zusätzlicher Sicherheitsmerkmale auf Chipkarten kostengünstig hergestellt werden kann sowie ein kostengünstiges Verfahren zur Herstellung einer Chipkate mit Linsenstruktur bereitzustellen.

Gelöst werden diese technischen Aufgabenstellungen mit den technischen Lehren der unabhängigen Patentansprüche.

Weitere Ausgestaltungen ergeben sich in Zusammenschau mit den Merkmalen der unabhängigen Patentansprüche, aus den in den rückbezogenen Unteransprüchen beschriebenen Ausgestaltungsvarianten.

Das Spritzgusswerkzeug zur Herstellung einer Chipkarte besteht aus zwei Werkzeughälften, von denen eine als Spritzseite mit wenigstens einer Einspritzdüse und die andere als Schließseite ausgeführt ist. Innerhalb des geschlossenen Spritzgusswerkzeuges bilden die Werkzeughälften im Innern eine Spritzgusswerkzeugkavität, die die Form der fertig gestellten Chipkarte aufweist.

Erfindungswesentlich weist mindestens eine der Werkzeughälften auf seiner innenliegenden Spritzgusswerkzeugkavitätsoberfläche einen Teilbereich auf, welcher mit einer Mikrolinsenstrukturfläche versehen ist. Durch das beschriebene erfindungsgemässe Spritzgusswerkzeug wird es möglich, eine Chipkarte im Spritzgussverfahren in einem Arbeitsgang herzustellen, bei der zumindest in einem Teilbereich der Chipkartenoberfläche die für die beschriebenen Sicherheitsmerkmale notwendige Mikrolinsenstruktur vorhanden ist. Der Teilbereich kann hierbei integrierter Bestandteil der Oberfläche sein, jedoch ist es auch möglich, den Teilbereich auf einem separaten, in die Werkzeughälfte einsetzbaren Stempelelement anzuordnen. Auf diese Weise lassen sich mit einem Spritzgusswerkzeug bei Bedarf Chipkarten mit unterschiedlichen Mikrolinsenstrukturoberflächen herstellen, die jeweils auf einem wechselbaren Stempelelement angeordnet sind.

Entsprechend einer zusätzlichen vorteilhaften Weiterbildung des erfindungsgemäßen Spritzgusswerkzeuges kann das Stempelelement oder der Teilbereich mit der Mikrolinsenstruktur mit einer Heizeinrichtung versehen sein. Die Heizeinrichtung bewirkt eine partielle Temperaturerhöhung im Bereich der Mikrolinsenstruktur und verbessert die Prägung der Struktur in die Chipkarte im Rahmen des Spritzgussverfahrens.

Das mit dem erfindungsgemäßen Spritzgusswerkzeug durchzuführende Verfahren beinhaltet zwei unterschiedliche Lösungsvarianten und besteht im Wesentlichen aus den nachfolgend geschilderten Verfahrensschritten. Für die Herstellung einer mit einer Mikrolinsenstruktur versehenen Chipkarte gemäß der ersten Variante wird zunächst in die mit dem Mikrolinsenstrukturteilbereich versehene Werkzeughälfte ein transparentes Kunststofflabel eingelegt. Danach wird das Spritzgusswerkzeug geschlossen und durch die Einspritzdüse verflüssigter Kunststoff zur Bildung des Chipkartenkörpers in die Spritzgusswerkzeugkavität eingeführt. Das unter Druck stehende Kunststoffmaterial füllt hierbei den Innenraum der Spritzgusswerkzeugkavität vollständig aus und drückt das vorher eingelegte transparente Kunststofflabel gegen die Kavitätswandung. Im Bereich der Mikrolinsenstruktur wird diese Struktur auf die Oberfläche des Kunststofflabels und somit die Chipkarte übertragen. Nach dem Erkalten des verflüssigten Kunststoffes ist der Chipkartenkörper mit hoher Formgenauigkeit fertig gestellt, wobei gleichzeitig die Lagetoleranzen der Mikrolinsenstruktur auf dem Chipkartenkörper äußerst geringe Werte aufweisen. Dies ist gegenüber der bislang bekannten Herstellung von Chipkarten mit Mikrolinsenstrukturen im Rahmen eines Laminationsvorganges insbesondere deshalb von Vorteil, da laminierte Karten erst nach dem eigentlichen Laminationsprozess in ihrer endgültigen Form aus dem laminierten Kunststoffmaterial ausgestanzt werden, was naturgemäß entsprechende größere Lagetoleranzen des Mikrolinsenstrukturbereiches mit sich bringt.

Eine alternative Herstellweise für eine Chipkarte mit einem Mikrolinsenstrukturteilbereich sieht vor, dass zunächst in diejenige mit dem Mikrolinsenstrukturteilbereich versehene Werkzeughälfte des geöffneten Spritzgusswerkzeuges ein nicht transparentes Kunststofflabel eingelegt wird, wobei das Kunststofflabel im Abschnitt des Mikrolinsenstrukturteilbereiches eine entsprechende Durchbrechung aufweist. Nachdem das Spritzgusswerkzeug geschlossen worden ist, wird der Werkzeugkavität verflüssigter transparenter Kunststoff zur Bildung des Chipkartenkörpers einschließlich der im nicht transparenten Kunststofflabel vorhandenen Durchbrechung zugeführt. Ergebnis des Herstellvorganges ist somit ein nicht transparenter Kunststoffkartenkörper mit einem transparenten, mit einer Mikrolinsenstruktur versehenem Oberflächenteilbereich.

Es ist darüber hinaus denkbar, mit Hilfe der zweiten Ausgestaltungsvariante auch eine Chipkarte herzustellen, welche ein innerhalb der Chipkarte angeordnetes transparentes Fenster aufweist, wobei die außen liegende, an den beiden Flachseiten angeordnete Oberfläche des Fensters jeweils mit einer Mikrolinsenstruktur versehen ist. Hierzu weist die erforderliche Spritzgusswerkzeugform auch in der zweiten Werkzeughälfte, dass heißt auf der Spritzseite einen Teilbereich mit Mikrolinsenstrukturoberfläche auf. Dieser liegt bevorzugt den ersten Teilbereich gegenüber. Die Chipkarte wird hierbei aus einem transparenten Kunststoff hergestellt. In den zwischen den beiden Mikrolinsenstrukturbereichen an der Ober- und Unterseite der Chipkarte liegenden inneren Teilbereich des Chipkartenkörpers, dem so genannten Fenster, lassen sich im Rahmen dieser Ausgestaltungsvariante beispielsweise mittels Lasertechnologie Informationselemente einbringen, die beispielsweise holografische Speicherelemente oder andere maschinenlesbare Informationen beinhalten können. Diese Informationselemente lassen sich auf Grund des durchgehenden Fensterbereiches derartiger Chipkarten von beiden Seiten betrachten bzw. lesen.

Als transparentes Material für derartige Chipkarten ist beispielsweise MABS, Polycarbonat oder PET verwendbar.

Im Folgenden wird das erfindungsgemäße Spritzgusswerkzeug sowie das mit Hilfe dieses Werkzeuges durchzuführende Verfahren anhand der beigefügten Zeichnungen näher erläutert.

Es zeigen hierbei:
- Figur 1a: einen schematischer Querschnitt durch eine erste Ausführungsvariante des erfindungsgemäßen Spritzgusswerkzeuges während des ersten Verfahrensschrittes zur Herstellung einer Chipkarte gemäß Anspruch 6,
- Figur 1b: einen Querschnitt durch das Spritzgusswerkzeug der Figur 1a nach dem Schließen der Spritzgusswerkzeugform,
- Figur 2a: einen Querschnitt durch eine zweite Ausführungsvariante einer erfindungsgemäßen Spritzgussform während des ersten Verfahrensschrittes zur Herstellung einer Chipkarte nach Anspruch 7 und
- Figur 2b: einen Querschnitt durch die Werkzeugform gemäß Figur 2a nach dem Schließen der Spritzgusswerkzeugform.

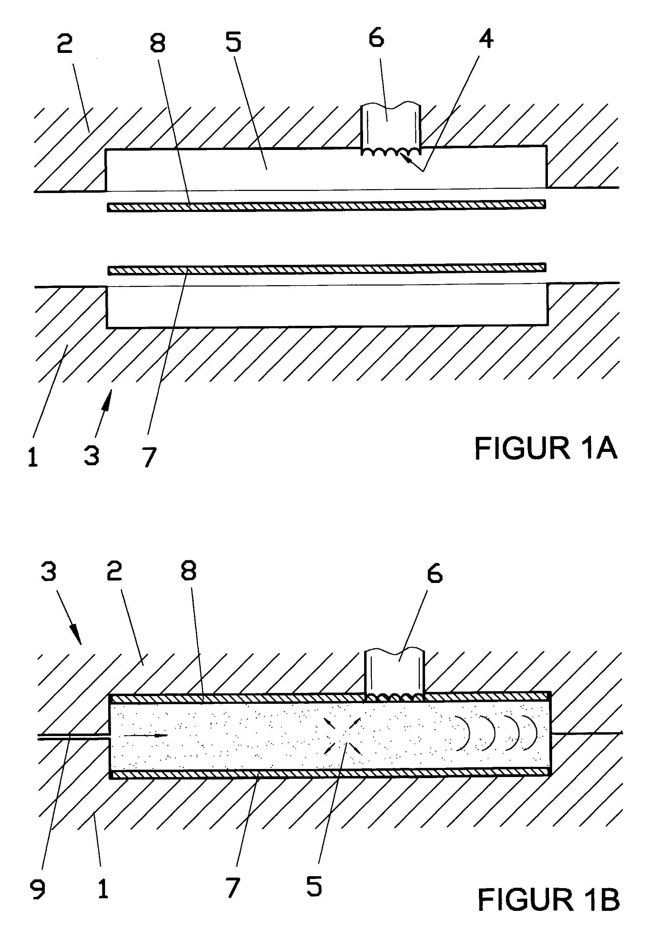

Das in der Figur 1a und 1b dargestellte Spritzgusswerkzeug, welches insgesamt mit 3 bezeichnet ist, weist zwei Werkzeughälften 1 und 2 auf, wobei die Werkzeughälfte 1 die Spritzseite ist und demgemäss Einspritzdüsen zur Einbringung eines verflüssigten Kunststoffes aufweist. Die Werkzeughälfte 2 bildet die Schließseite des Spritzgusswerkzeuges 3 und ist beweglich ausgeführt und kann somit auf die ihr zugeordnete Werkzeughälfte 1 zu- und wegbewegt werden. In der Werkzeughälfte 2 des Spritzgusswerkzeuges 3 befindet sich ein Teilbereich 4, welcher eine Mikrolinsenstrukturoberfläche aufweist. Die Mikrolinsenstrukturoberfläche wird durch im Wesentlichen halbkugelförmige, nebeneinander angeordnete Vertiefungen in der Kavitätsoberfläche gebildet. Darüberhinaus sind auch prismenförmige, stufenförmige oder pyramidenförmige Vertiefungen möglich.

Im dargestellten Ausführungsbeispiel ist die Mikrolinsenstrukturoberfläche an einem separaten Stempelelement 6 befindlich. Das Stempelelement 6 ist in die Werkzeughälfte 3 einsetzbar, so dass Mikrolinsenstrukturbereiche mit unterschiedlichen Linsengrößen problemlos in die Spritzgusswerkzeugform implantiert werden können. Entsprechend einer vorteilhaften Weiterbildung wird das Stempelelement beweglich verfahrbar ausgeführt. Dies bietet den Vorteil, dass das zunächst während des Spritzgießvorganges nicht über die Oberfläche der Spritzgießkavität vorstehende Stempelelement 6 erst in der Nachdruckphase des Spritzgießvorganges in die Kavität ausgefahren wird und dann erst die Mikrolinsenstruktur geprägt wird. Ergebnis dieser Abfolge des Herstellungsprozesses ist eine spannungsärmere Gestaltung im Oberflächenbereich und damit eine bessere Funktion der optischen Struktur.

Darüber hinaus kann das Stempelelement mit einer hier nicht näher dargestellten Heizeinrichtung versehen sein, mit der eine partielle Aufheizung des Teilbereiches 4 mit der Mikrolinsenstrukturoberfläche herbeigeführt werden kann.

Bei der ersten Variante des erfindungsgemäßen Verfahrens zum Herstellen einer Chipkarte mit Hilfe des oben beschriebenen Spritzgusswerkzeuges werden in diesem Ausführungsbeispiel zunächst dünne Kunststofflabel 7 und 8 zumeist in Form einer Folie in die innere Werkzeugkavität 5 des Spritzgusswerkzeuges 3 eingesetzt, wobei zumindest das Label 8 zwingend transparent ist. Die Label werden an die innere Oberfläche der Flachseiten der Werkzeugkavität 5 zur Anlage gebracht und dort mittels elektrostatischer Aufladung oder eines pneumatisch erzeugten Unterdruckes gehalten. Anschließend wird die Werkzeughälfte 2 auf die Werkzeughälfte 1 zugefahren und somit das Spritzgusswerkzeug 3 geschlossen.

Der nächste Verfahrensschritt sieht vor, durch eine Einspritzdüse 9 verflüssigten Kunststoff zur Bildung des eigentlichen Chipkartenkörpers in die Kavität einzubringen. Der verflüssigte Kunststoff verteilt sich innerhalb der Kavität 5 und drückt die eingelegten Label 7 und 8 gegen die inneren Oberflächen der Kavität 5. Dabei wird durch den hohen Spritzdruck und die hohe Temperatur des zum Spritzguss verwendeten Kunststoffes, beispielsweise MABS, die auf der unteren, der Kavität 5 zugewandten Seite des Stempelelementes 6 befindliche Mikrolinsenstrukturoberfläche auf die äußere Flachseite des transparenten Kunststofflabels 8 übertragen. Nach Beendigung des Einspritzvorganges und dem Abkühlen des verflüssigten Werkstoffes kann nach Auseinanderfahren der Werkzeughälften 1 und 2 die fertig hergestellte Chipkarte mit dem außen liegenden Teilbereich 4, welcher mit der eingeprägten Mikrolinsenstrukturoberfläche versehen ist, dem Spritzgusswerkzeug entnommen werden. In einem anschließenden Arbeitsgang kann dann in einem unter dem Teilbereich befindlichen, innenliegenden Areal der Chipkarte beispielsweise durch Laserbelichtung Kennzeichnungen wie beispielsweise Mikrobilder, Buchstaben oder dergleichen eingebracht werden, die der Betrachter dann durch die Mikrolinsen des Teilbereiches 4 vergrößert mit dem Auge sehen kann, da das durchsichtige Label 8 den Durchblick auf die innere Oberfläche des gespritzten Kunststoffbereiches ermöglicht.

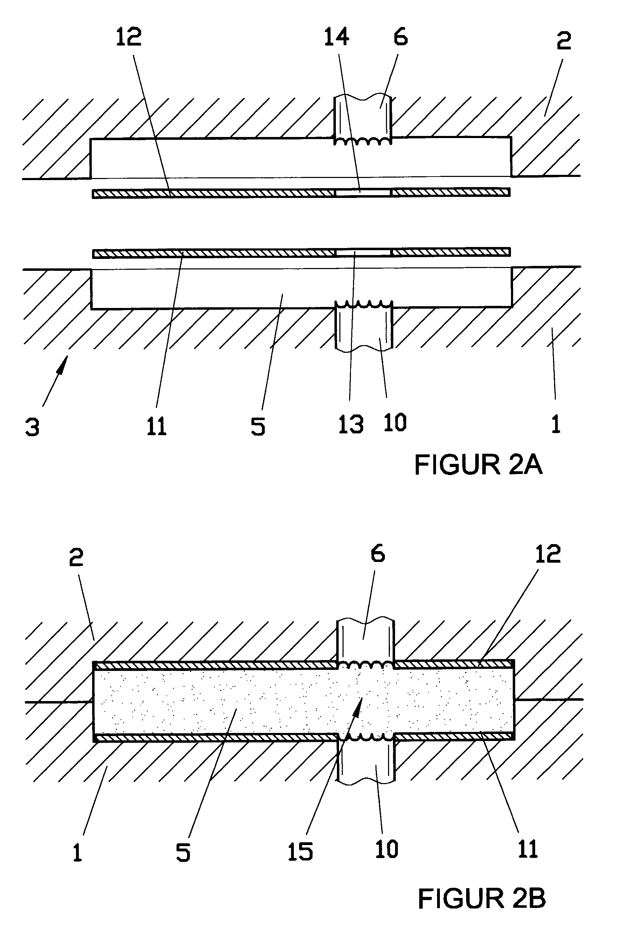

In den Figuren 2a und 2b ist eine alternative Variante der erfindungsgemäßen Spritzgusswerkzeugform dargestellt, bei der in Ergänzung zu dem in der Werkzeughälfte 2 angeordneten Stempelelement 6 auch in der Werkzeughälfte 1 ein analog ausgebildetes Stempelelement 10 befindlich ist. Dieses Stempelelement 10 befindet sich dem Stempelelement 6 gegenüberliegend und kann entsprechend einer vorteilhaften Ausgestaltung ebenfalls mit einem Heizelement versehen werden.

Das Herstellen einer Chipkarte mit dem in den Figuren 2a und 2b dargestellten Spritzgussformen beginnt damit, dass in beide Werkzeughälften 1 und 2 jeweils ein Kunststofflabel 11 und 12 eingelegt wird. Diese Kunststofflabel 11 und 12 unterscheiden sich von denjenigen Kunststofflabeln 7 und 8 der Figuren 1a und 1b dadurch, dass sie nicht transparent sind und im Teilbereich 4, in dem die Mikrolinsenstrukturoberflächen befindlich sind, jeweils eine Durchbrechung 13 bzw. 14 aufweisen.

Nach dem Einlegen der Kunststofflabel 11 und 12 werden diese wiederum mittels elektrostatischer Aufladung oder einem pneumatisch erzeugten Unterdruck an der inneren Oberfläche der Kavität 5 gehalten und die Spritzgusswerkzeugform wird geschlossen. Im Unterschied zum Verfahrensablauf wie er in den Figuren 1a und 1 b dargestellt worden ist, wird anschließend ein hochtransparenter Kunststoff wie beispielsweise MABS oder Polycarbonat in die Kavität 5 des Spritzgusswerkzeuges 3 eingebracht. Der eingespritzte Kunststoff füllt im Rahmen des Spritzvorganges die gesamte Kavität 5 einschließlich der in den Kunststofflabeln 11 und 12 befindlichen Durchbrechungen 13, 14 aus. Durch den Druck des eingespritzten Kunststoffmaterials wird die Mikrolinsenstrukturoberfläche der Stempelelemente 6 und 10 in die äußere Oberfläche des in den Durchbrechungen 13, 14 befindlichen Kunststoffes eingeprägt, so dass sich nach dem Abkühlen eine Chipkarte ergibt, welche ein durchgehendes transparentes Fenster 15 aufweist, welches an seinen Außenseiten jeweils mit einer Mikrolinsenstrukturoberfläche versehen ist. In diesem Fenster kann anschließend analog der Beschreibung zu den Figuren 1a und 1b beispielsweise mittels Lasertechnik eine Beschriftung, Mikrobilder oder dergleichen eingebracht werden. Darüber hinaus ist es möglich, in dem transparenten Fenster maschinenlesbare Informationen oder eine Datenspeicherung mittels holografischer Elemente vorzunehmen.

### Bezugszeichenliste

- 1.: Werkzeughälfte (Spritzseite)
- 2.: Werkzeughälfte (Schließseite)
- 3.: Spritzgusswerkzeug
- 4.: Teilbereich
- 5.: Kavität
- 6.: Stempelelement
- 7.: Kunststofflabel
- 8.: Kunststofflabel
- 9.: Einspritzdüse
- 10.: Stempelelement
- 11.: Kunststofflabel
- 12.: Kunststofflabel
- 13.: Durchbrechung
- 14.: Durchbrechung
- 15.: Fenster

## Patentansprüche

1. Spritzgusswerkzeug zur Herstellung einer Chipkarte mit zwei Werkzeughälften (1, 2), von denen eine als Spritzseite (1) mit wenigstens einer Einspritzdüse und die andere als Schließseite (2) ausgeführt ist, wobei eine innerhalb des geschlossenen Spritzgusswerkzeuges (3) gebildete Spritzgusswerkzeugkavität (4) die Form der Chipkarte (5) bildet und mindestens eine der Werkzeughälften (1, 2) auf seiner innenliegenden Spritzgusswerkzeugkavitätsoberfläche einen Teilbereich (4) aufweist, welcher mit einer Mikrolinsenstrukturoberfläche versehen ist.

2. Spritzgusswerkzeug nach Anspruch 1, **dadurch gekennzeichnet, dass** der Teilbereich (4) auf der Spritzgusswerkzeugkavitätsoberfläche beider Werkzeughälfte (1, 2) angeordnet ist.

3. Spritzgusswerkzeug nach einem der Ansprüche 1 oder 2, **dadurch gekennzeichnet, dass** der Teilbereich (4) auf einem separaten in die Werkzeughälfte (1, 2) einsetzbaren, beweglichen Stempelelement (6) angeordnet ist.

4. Spritzgusswerkzeug nach Anspruch 3, **dadurch gekennzeichnet, dass** das Stempelelement (6) mit einer Heizeinrichtung versehen ist.

5. Spritzgusswerkzeug nach Anspruch 3 oder 4, **dadurch gekennzeichnet, dass** das Stempelelement gegenüber der inneren Oberfläche der Spritzgusswerkzeugkavität senkrecht verfahrbar ist.

6. Spritzgusswerkzeug nach einem der Ansprüche 1 bis 4, **dadurch gekennzeichnet, dass** die Mikrolinsenstruktur aus einer Mehrzahl nebeneinander angeordneter, im Wesentlichen halbkreisförmiger Ausnehmungen besteht.

7. Spritzgusswerkzeug nach einem der Ansprüche 1 bis 4, **dadurch gekennzeichnet, dass** die Mikrolinsenstruktur aus einer Mehrzahl nebeneinander angeordneter, im Wesentlichen pyramidenförmiger Ausnehmungen besteht.

8. Spritzgusswerkzeug nach einem der Ansprüche 1 bis 4, **dadurch gekennzeichnet, dass** die Mikrolinsenstruktur aus einer Mehrzahl nebeneinander angeordneter, im Wesentlichen prismenförmiger Ausnehmungen besteht.

9. Spritzgusswerkzeug nach einem der Ansprüche 1 bis 4, **dadurch gekennzeichnet, dass** die Mikrolinsenstruktur aus einer Mehrzahl nebeneinander angeordneter, im Wesentlichen stufenförmiger Ausnehmungen besteht.

10. Verfahren zur Herstellung einer Chipkarte mit einem Spritzgusswerkzeug (3) nach einem der vorstehend genannten Ansprüche 1 bis 9, **gekennzeichnet durch** folgende Verfahrensschritte:
- Einlegen eines transparenten Kunststofflabels (7, 8) in die mit dem Mikrolinsenstrukturteilbereich versehene Werkzeughälfte (1,2) des geöffneten Spritzgusswerkzeuges (3),
- Schließen des Spritzgusswerkzeuges (3),
- Zuführung eines verflüssigten Kunststoffes zur Bildung des Chipkartenkörpers.

11. Verfahren zur Herstellung einer Chipkarte mit einem Spritzgusswerkzeug (3) nach einem der Ansprüche 1 bis 9, **gekennzeichnet durch** folgende Verfahrensschritte:
- Einlegen eines nichttransparenten Kunststofflabels in die mit dem Mikrolinsenstrukturteilbereich versehene Werkzeughälfte (1,2) des geöffneten Spritzgusswerkzeuges, wobei das Kunststofflabel im Abschnitt des Mikrolinsenteilbereiches eine korrespondierende Durchbrechung aufweist,
- Schließen des Spritzgusswerkzeuges (3)
- Zuführung eines verflüssigten transparenten Kunststoffes zur Bildung des Chipkartenkörpers.

12. Verfahren zur Herstellung einer Chipkarte nach Anspruch 10 oder 11, **dadurch gekennzeichnet, dass** nach der Zuführung des verflüssigten Kunststoffes zur Bildung des Chipkartenkörpers in der Nachdruckphase das Stempelelement mit dem Teilbereich der Mikrolinsenstrukturoberfläche in den gegossenen Chipkartenkörper eingedrückt wird.

13. Verfahren zur Herstellung einer Chipkarte nach Anspruch 10 bis 12, **dadurch gekennzeichnet, dass** vor dem Zuführen des verflüssigten Kunststoffes der Mikrolinsenstrukturteilbereich auf eine gegenüber der übrigen Spritzgusswerkzeugform erhöhte Temperatur aufgeheizt wird.

14. Verfahren zur Herstellung einer Chipkarte nach einem der Ansprüche 10 bis 13, **dadurch gekennzeichnet, dass** das nach Fertigstellung einer Chipkarte in den innerhalb der Chipkarte unterhalb der eingeprägten Mikrolinsenstruktur befindlichen Teilbereichen mittels einer Laserschreibvorrichtung Informationselemente eingebracht werden.

15. Verfahren zur Herstellung einer Chipkarte nach Anspruch 14, **dadurch gekennzeichnet, dass** die Informationselemente holografische Speicherelemente sind.

16. Verfahren zur Herstellung einer Chipkarte nach Anspruch 14, **dadurch gekennzeichnet, dass** die Informationselemente maschinenlesbare Daten beinhalten.
